# FASCICULE DE BREVET EUROPEEN

(11) **EP 3 328 190 B1**
(45) Date de publication et mention de la délivrance du brevet: **07.07.2021**
(21) Numéro de dépôt: 16750968.6
(22) Date de dépôt: 18.07.2016
(51) Int. Cl.: A01K 1/01, A01K 1/10

(54) **VÉHICULE AUTONOME POUR REPOUSSER DU FOURRAGE**
SELBSTFAHRENDER WAGEN ZUM ANSCHIEBEN VON STROHFUTTER
AUTONOMOUS FORAGE PUSHING VEHICLE

(30) Priorité: 31.07.2015 FR 1557440
(43) Date de publication de la demande: 06.06.2018
(73) Titulaire: ALB Innovation, 42600 Montbrison (FR)
(72) Inventeur: VIALLA, Philippe, 42600 Chalain Le Comtal (FR)
(74) Mandataire: Delorme, Nicolas
(86) Numéro de dépôt international: PCT/FR2016/051834
(87) Numéro de publication internationale: WO 2017/021607

(56) Documents cités:
- EP-A1- 1 779 722
- WO-A1-2010/044656
- DE-A1-102009 024 079
- DE-U1-202008 001 482
- FR-A1- 2 862 489
- FR-A1- 2 995 505

## Description

La présente invention concerne un véhicule et plus particulièrement un véhicule permettant de repousser du fourrage.

Dans le domaine de l'élevage bovin, l'alimentation des animaux dans une étable est souvent réalisée en plaçant du fourrage dans une allée contigüe à l'enclos. Les animaux ont accès au fourrage en passant leur tête à travers une grille adaptée.

Cette méthode de disposition du fourrage permet à l'éleveur d'approvisionner facilement le fourrage.

Cependant, lorsqu'ils s'alimentent, les animaux ont tendance à éparpiller le fourrage qui peut alors se trouver hors de leur portée.

Ainsi, d'une manière générale, l'éleveur doit régulièrement repousser le fourrage au plus près des animaux.

De plus, en fin de journée l'éleveur doit nettoyer l'allée du fourrage refusé par les bovins.

Ces tâches sont répétitives et contraignantes pour les éleveurs.

DE202008001482 décrit un wagon mélangeur d'aliments comprenant:
- un véhicule autonome,
- un conteneur pour recevoir les aliments, le conteneur ayant au moins une ouverture pour le remplissage et le vidage du récipient, caractérisé en ce que le récipient est sensiblement cylindrique et peut tourner autour de son axe central.

FR2995505 décrit un dispositif pousseur comprenant un support et un organe pousseur porté par le support, l'organe pousseur étant prévu pour pousser des aliments sur le sol suivant une direction transversale du fait du déplacement du dispositif pousseur suivant une direction longitudinale perpendiculaire à la direction transversale, l'organe pousseur étant mobile par rapport au support en translation suivant la direction transversale.

FR2862489 décrit un chariot de distribution d'aliments pourvu d'organes de roulage au sol et comportant un caisson équipé d'un organe de distribution comprenant une goulotte de distribution s'étendant latéralement en porte à faux à partir de l'organe de distribution, et un déflecteur s'étendant obliquement depuis l'avant du chariot jusque sous la goulotte, latéralement en retrait de celle-ci.DE102009024079 décrit une unité d'entraînement ayant une pelle. La pelle présente des volets mobiles rotatifs au niveau de l'ouverture sur les côtés gauche et droit. Les volets sont actionnés indépendamment et verrouillés dans n'importe quelle position.

EP1779722 décrit un appareil de poussée d'alimentation comprenant un corps de déplacement qui se déplace le long d'un chemin d'alimentation, une lame de poussée d'alimentation qui est montée sur un châssis du corps de déplacement et est capable de s'élever du chemin d'alimentation, et un premier système hydraulique le vérin qui est monté sur le châssis du corps de déplacement, et entraîne réciproquement la lame de poussée d'alimentation entre un côté de décrochage et un côté opposé au décrochage, avec mouvement du corps de déplacement.

WO2010/044656 divulgue un véhicule sans pilote pourvu d'un châssis et d'un dispositif de commande pour contrôler le véhicule et d'un dispositif de locomotion pour déplacer le véhicule sans pilote, et avec un dispositif de protection pour protéger le véhicule contre les obstacles, caractérisé en ce que le dispositif de protection comprend un conducteur électrique palpable qui s'étend à l'extérieur du véhicule, avantageusement autour, et une source de tension pour fournir une tension au conducteur sous la commande du dispositif de commande.

En conséquence, la présente invention a pour objectif de proposer un véhicule permettant de repousser le fourrage au plus près des bêtes et permettant de nettoyer le fourrage refusé.

L'invention concerne un véhicule autonome avec des moyens de propulsion selon la revendication 1. Le véhicule comprend un organe de raclage orientable configuré pour repousser du fourrage, une électronique de commande et des moyens de détection d'obstacles. Les moyens de propulsion et l'électronique de commande permettent au véhicule de passer dans un mode de repoussage dans lequel le véhicule suit une trajectoire sensiblement oscillante autour d'un point de rotation situé entre les moyens de propulsion pour que l'organe de raclage collecte du fourrage et l'évacue latéralement sous la forme d'un andain, ou dans un mode de nettoyage dans lequel le véhicule suit une trajectoire jusqu'à une zone de rejet, l'organe de raclage permettant de collecter et repousser le fourrage sur l'ensemble de la trajectoire jusqu'à la zone de rejet.

Ainsi, le véhicule selon l'invention peut alternativement repousser le fourrage près des animaux ou nettoyer le fourrage refusé.

La trajectoire oscillante du véhicule en mode repoussage est une disposition particulièrement avantageuse de l'invention. En effet, la trajectoire oscillante du véhicule lui permet de former un andain pouvant être sensiblement rectiligne, notamment grâce à une combinaison subtile entre sa géométrie et son comportement autour d'un point de rotation situé entre les moyens de propulsion. La cinématique permet un effort de repoussage conséquent, qui facilite la mise en place de l'andain.

De plus, l'électronique de commande et les moyens de propulsion permettent au véhicule d'être autonome et de suivre une trajectoire déterminée.

L'organe de raclage comprend une lame fixe orientée selon un angle compris entre 50 et 70 degrés par rapport à un axe longitudinal du véhicule.

Cette orientation de la lame fixe permet au véhicule de repousser le fourrage latéralement, sous la forme d'un andain.

L'organe de raclage comprend une lame orientable manœuvrable entre une position rétractée et une position déployée dans laquelle la lame orientable peut racler le fourrage refusé.

Dans une position déployée de nettoyage, la lame orientable peut être sensiblement perpendiculaire à un axe longitudinal du véhicule.

Cette orientation de la lame orientable permet de collecter le fourrage pour l'évacuer dans la zone de rejet.

La lame orientable peut être manœuvrée par un vérin entre la position rétractée et la position déployée.

L'électronique de commande peut comprendre un dispositif de filoguidage permettant au véhicule de suivre un fil de filoguidage positionné au sol.

Les moyens de détection d'obstacle peuvent comprendre au moins un sonar positionné dans le sens de progression du véhicule.

Ainsi le sonar permet par exemple de détecter la présence d'un homme, d'une bête, ou d'un objet sur la trajectoire du véhicule.

Les moyens de détection d'obstacle peuvent comprendre au moins un capteur de contact.

Les capteurs de contact permettent de détecter une collision avec, par exemple, un homme, une bête ou un objet.

L'électronique de commande peut comprendre une interface de sélection permettant d'enclencher alternativement le mode de repoussage et le mode de nettoyage.

L'électronique de commande peut comprendre un organe de programmation temporelle permettant d'enclencher automatiquement le mode de repoussage.

Ainsi le véhicule peut être déclenché automatiquement à un moment déterminé et autant de fois que nécessaire.

L'invention concerne aussi un procédé de raclage de fourrage par un véhicule selon l'invention. Le procédé comprend les phases suivantes :
- détermination d'une trajectoire de filoguidage ;
- positionnement d'un véhicule selon l'invention sur un point de départ ;
- enclenchement d'un mode du véhicule ;
- suivi du mode enclenché ;
- retour du véhicule au point de départ ;
- arrêt du véhicule.

Le procédé de raclage selon l'invention permet au véhicule selon l'invention de racler le fourrage de manière autonome, en sélectionnant alternativement un mode de fonctionnement du véhicule.

Selon une disposition particulière, la phase d'enclenchement d'un mode du véhicule peut comprendre l'enclenchement du mode repoussage.

Selon la même disposition, la phase de suivi du mode enclenché peut comprendre les étapes suivantes :
- détection du fil de filoguidage par l'électronique de commande ;
- passage de la lame orientable en position rétractée ;
- avance et oscillation du véhicule le long de la trajectoire de filoguidage pour collecter le fourrage et l'évacuer sous la forme d'un andain.

L'étape d'avance et oscillation du véhicule le long de la trajectoire de filoguidage pour collecter le fourrage et l'évacuer sous la forme d'un andain, peut comprendre les étapes de :
- avance du véhicule le long du fil de filoguidage ;
- repousse du fourrage positionné sur la trajectoire du véhicule ;
- arrêt de l'avance du véhicule ;
- rotation du véhicule pour que la lame fixe et la lame orientable soient sensiblement parallèles à la trajectoire du fil de filoguidage ;
- rotation du véhicule pour que l'axe longitudinal du véhicule soit sensiblement parallèle à la trajectoire du fil de filoguidage.

L'étape d'oscillation du véhicule le long de la trajectoire de filoguidage est une disposition particulièrement avantageuse de l'invention. En effet, cette étape permet de réaliser un andain sensiblement rectiligne le long de la trajectoire de filoguidage.

Selon une autre disposition, la phase d'enclenchement d'un mode du véhicule peut comprendre l'enclenchement du mode nettoyage du fourrage refusé.

Selon la même disposition, la phase de suivi du mode enclenché peut comprendre les étapes suivantes :
- détection du fil de filoguidage par l'électronique de commande ;
- passage de la lame orientable en position déployée de nettoyage ;
- avance du véhicule le long de la trajectoire de filoguidage pour collecter le fourrage ;
- évacuation du fourrage dans la zone de rejet.

La phase de détermination d'une trajectoire de filoguidage peut comprendre les étapes de :
- dépose d'un fil de filoguidage le long de la trajectoire de filoguidage ;
- intégration dans l'électronique de commande de la position d'un point de départ ;
- intégration dans l'électronique de commande de la position d'une zone de rejet.

De plus, le procédé peut comprendre en outre une étape d'arrêt de sécurité qui comprend les phases de :
- détection d'un obstacle par le sonar ou par l'un des capteurs de contact ;
- Arrêt du véhicule ;
- Détection de la disparition de l'obstacle par le sonar ou par l'un des capteurs de contact ;
- Redémarrage du véhicule ;

D'autres caractéristiques et avantages de l'invention se dégageront de la description qui va suivre, en regard des figures annexées, qui présentent à titre d'exemple non limitatif un mode de réalisation de l'invention.
- La figure 1 est une vue en perspective d'un véhicule selon l'invention, sans carter de protection ;
- La figure 2 est une vue de dessus d'un véhicule selon l'invention lorsque la lame orientable est en position déployée de nettoyage ;
- La figure 3 est une vue schématique d'un véhicule selon l'invention fonctionnant en mode repoussage ;
- La figure 4 est une vue schématique d'un véhicule selon l'invention fonctionnant en mode nettoyage.

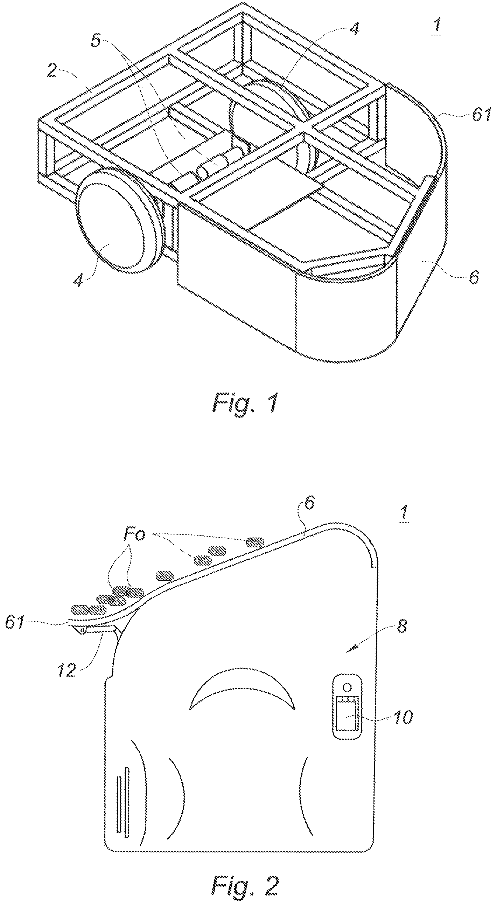

L'invention concerne un véhicule 1 autonome permettant de repousser du fourrage Fo, représenté sur les figures 1 et 2.

Comme on peut le voir sur la figure 1, le véhicule 1 comprend une ossature 2 à laquelle sont fixées des roues motorisées 4 et une lame fixe 6.

L'ossature 2 peut être réalisée avec des profilés métalliques soudés.

Il est remarquable que la lame fixe 6 est positionnée en biseau par rapport à un axe longitudinal du véhicule 1. Ainsi, selon un mode de réalisation, la lame fixe 6 est orientée de 63 degrés par rapport à l'axe longitudinal du véhicule 1.

Selon un mode réalisation la lame fixe 6 peut être réalisée en polymère.

Comme on peut l'observer sur la figure 2, un carter 8 peut envelopper l'ossature 2.

De plus, une interface de sélection 10 peut être positionnée sur le carter 8.

En outre, il est notable qu'une lame orientable 61 est positionnée à une extrémité de la lame fixe 6.

Selon un mode de réalisation, la lame orientable 61 peut être une région d'extrémité de la lame fixe 6 laissée libre.

Comme on peut l'observer sur la figure 2, la lame orientable 61 peut être manœuvrée par un vérin 12.

Le vérin 12 permet de manœuvrer la lame orientable 61 entre une position rétractée et une position déployée. Ainsi, la lame orientable 61 peut être placée dans une position déployée de nettoyage dans laquelle elle est sensiblement perpendiculaire par rapport à l'axe longitudinal du véhicule 1. En position rétractée, la lame orientable 61 qui forme un rayon démarre dans le prolongement de la lame fixe 6 pour finir en tangence sur un flanc du véhicule 1, parallèle à l'axe longitudinal du véhicule 1. En outre, le véhicule 1 comprend une électronique de commande (non représentée) et des moyens de détection d'obstacles (non représentés).

L'électronique de commande peut comprendre un dispositif de filoguidage permettant au véhicule 1 de suivre un fil de filoguidage Fi positionné au sol.

De plus, l'électronique de commande peut comprendre un organe de programmation temporelle permettant d'activer le véhicule à un instant déterminé par avance.

Selon un mode de réalisation, les moyens de détection d'obstacle peuvent comprendre un sonar positionné dans le sens de progression du véhicule. De plus, les moyens de détection d'obstacle peuvent aussi comprendre au moins un capteur de contact.

Le sonar et les capteurs de contact permettent au véhicule 1 d'évoluer de manière autonome et en sécurité par rapport à l'environnement humain et animal.

D'une manière particulièrement avantageuse, l'interface de sélection 10 est connectée à l'électronique de commande. L'interface de sélection peut permettre à un utilisateur d'enclencher alternativement le mode de repoussage et le mode de nettoyage. De plus, l'interface de sélection 10 peut permettre de régler l'organe de programmation temporelle, pour choisir un moment d'activation du véhicule 1.

En outre, les roues 4 peuvent être motorisées par des moteurs électriques 5. Pour alimenter les moteurs électriques 5 et l'électronique de commande, le véhicule 1 peut embarquer des batteries rechargeables et un organe de connexion à un réseau électrique.

On peut se reporter aux figures 2 à 4 pour apprécier le fonctionnement du véhicule 1.

A l'usage, le véhicule 1 permet de racler du fourrage Fo, selon le procédé comprenant les étapes suivantes :
- détermination d'une trajectoire de filoguidage,
- positionnement d'un véhicule 1 sur un point de départ D,
- enclenchement d'un mode du véhicule 1,
- suivi du mode enclenché,
- retour du véhicule au point de départ D,
- arrêt du véhicule 1.

La phase de détermination d'une trajectoire de filoguidage peut comprendre les étapes de :
- dépose d'un fil de filoguidage Fi le long de la trajectoire de filoguidage,
- intégration dans l'électronique de commande de la position d'un point de départ D,
- intégration dans l'électronique de commande de la position d'une zone de rejet R.

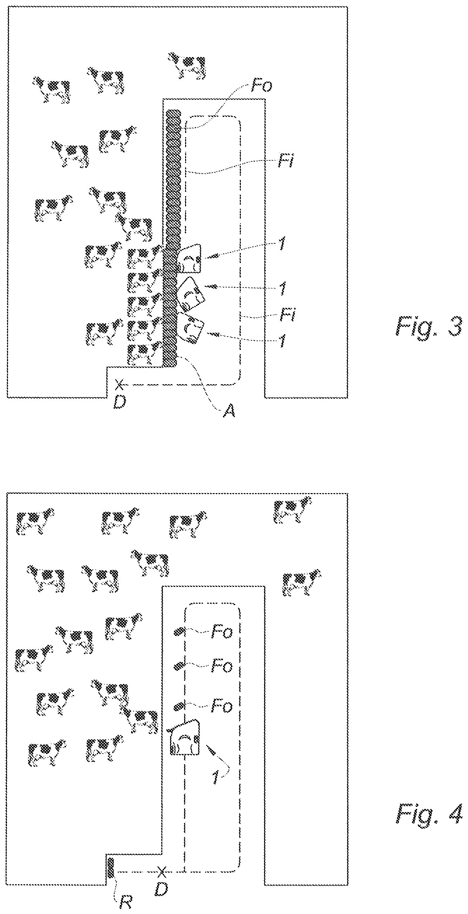

Lorsque le mode de repoussage (représenté sur la figure 3) est enclenché, la phase de suivi du mode enclenché comprend les étapes suivantes :
- détection du fil de filoguidage Fi par l'électronique de commande,
- passage de la lame orientable 61 en position rétractée,
- avance et oscillation du véhicule 1 le long de la trajectoire de filoguidage pour collecter le fourrage Fo et l'évacuer sous la forme d'un andain A.

L'étape d'avance et oscillation du véhicule le long de la trajectoire de filoguidage pour collecter le fourrage Fo et l'évacuer sous la forme d'un andain A est une disposition particulièrement avantageuse de l'invention. Cette étape se déroule et se répète comme suit :
- avance du véhicule 1 le long du fil de filoguidage F,
- repousse du fourrage Fo positionné sur la trajectoire du véhicule 1,
- arrêt de l'avance du véhicule,
- rotation du véhicule pour que la lame fixe 6 et la lame orientable 61 soient sensiblement parallèles à la trajectoire du fil de filoguidage F,
- rotation du véhicule 1 pour que l'axe longitudinal du véhicule 1 soit sensiblement parallèle à la trajectoire du fil de filoguidage F.

Lorsque le mode nettoyage (représenté sur la figure 4) est enclenché, la phase de suivi du mode enclenché comprend les étapes suivantes :
- détection du fil de filoguidage Fi par l'électronique de commande,
- passage de la lame orientable 61 en position déployée de nettoyage,
- avance du véhicule 1 le long de la trajectoire de filoguidage pour collecter le fourrage Fo refusé par les bêtes,
- évacuation du fourrage Fo, refusé par les bêtes, dans la zone de rejet R.

De plus, d'une manière particulièrement avantageuse, le procédé peut comprendre une étape d'arrêt de sécurité qui comprend les phases de :
- détection d'un obstacle par le sonar ou par l'un des capteurs de contact,
- arrêt du véhicule 1,
- détection de la disparition de l'obstacle par le sonar ou par l'un des capteurs de contact,
- redémarrage du véhicule 1.

Il est précisé que l'étape d'arrêt de sécurité peut être enclenchée à n'importe qu'elle étape du procédé, dès que le sonar ou les capteurs de contact détectent un obstacle.

Ainsi, l'invention propose un véhicule 1 permettant de repousser le fourrage Fo au plus près des bêtes et permettant de nettoyer le fourrage Fo refusé.

Bien entendu, l'invention ne se limite pas à la seule forme d'exécution représentée ci-dessus, mais elle embrasse au contraire toutes les formes de réalisation couvertes par l'étendue des revendications.

## Revendications

1. Véhicule (1) autonome avec des moyens de propulsion **caractérisé en ce qu'**il comprend un organe de raclage orientable configuré pour repousser du fourrage (Fo) et comprenant une lame orientable (61) manoeuvrable entre une position rétractée et une position déployée, une électronique de commande et des moyens de détection d'obstacles, les moyens de propulsion et l'électronique de commande permettant au véhicule (1) de passer dans un mode de repoussage dans lequel le véhicule (1) suit une trajectoire sensiblement oscillante autour d'un point de rotation situé entre les moyens de propulsion pour que l'organe de raclage collecte du fourrage (Fo) et l'évacue latéralement sous la forme d'un andain (A), ou dans un mode de nettoyage dans lequel le véhicule (1) suit une trajectoire jusqu'à une zone de rejet (R), l'organe de raclage permettant de collecter et repousser le fourrage (Fo) sur l'ensemble de la trajectoire jusqu'à la zone de rejet (R), l'organe de raclage comprenant une lame fixe (6) orientée selon un angle compris entre 50 et 70 degrés par rapport à un axe longitudinal du véhicule (1), la rotation ayant pour effet que la lame fixe (6), puis l'axe longitudinal du véhicule (1) se retrouvent alternativement sensiblement parallèles à la trajectoire.

2. Véhicule (1) selon la revendication 1, **caractérisé en ce que** dans une position déployée de nettoyage, la lame orientable (61) est sensiblement perpendiculaire à un axe longitudinal du véhicule (1).

3. Véhicule (1) selon l'une des revendications précédentes, **caractérisé en ce que** la lame orientable (61) est manœuvrée par un vérin (12) entre la position rétractée et la position déployée.

4. Véhicule (1) selon l'une des revendications précédentes, **caractérisé en ce que** l'électronique de commande comprend un dispositif de filoguidage permettant au véhicule (1) de suivre un fil de filoguidage (Fi) positionné au sol.

5. Véhicule (1) selon l'une des revendications précédentes, **caractérisé en ce que** les moyens de détection d'obstacle comprennent au moins un sonar positionné dans le sens de progression du véhicule (1).

6. Véhicule (1) selon l'une des revendications précédentes, **caractérisé en ce que** les moyens de détection d'obstacle comprennent au moins un capteur de contact.

7. Véhicule (1) selon l'une des revendications précédentes, **caractérisé en ce que** l'électronique de commande comprend une interface de sélection (10) permettant d'enclencher alternativement le mode de repoussage et le mode de nettoyage.

8. Véhicule (1) selon l'une des revendications précédentes, **caractérisé en ce que** l'électronique de commande comprend un organe de programmation temporelle permettant d'enclencher automatiquement le mode de repoussage.

9. Procédé de raclage de fourrage (Fo) par un véhicule (1) selon l'une des revendications 1 à 8, **caractérisé en ce que** le procédé comprend les phases suivantes :
- détermination d'une trajectoire de filoguidage,
- positionnement d'un véhicule (1) selon l'une des revendications 1 à 8 sur un point de départ (D),
- enclenchement d'un mode du véhicule (1),
- suivi du mode enclenché,
- retour du véhicule (1) au point de départ (D),
- arrêt du véhicule (1).

10. Procédé selon la revendication 9, **caractérisé en ce que** la phase d'enclenchement d'un mode du véhicule (1) comprend l'enclenchement du mode repoussage.

11. Procédé selon la revendication 10, **caractérisé en ce que** la phase de suivi du mode enclenché comprend les étapes suivantes :
- détection du fil de filoguidage (Fi) par l'électronique de commande,
- passage de la lame orientable (61) en position rétractée,
- avance et oscillation du véhicule (1) le long de la trajectoire de filoguidage pour collecter le fourrage (Fo) et l'évacuer sous la forme d'un andain (A).

12. Procédé selon la revendication 11, **caractérisé en ce que** l'étape d'avance et oscillation du véhicule (1) le long de la trajectoire de filoguidage pour collecter le fourrage (Fo) et l'évacuer sous la forme d'un andain (A), comprend les étapes de :
- avance du véhicule (1) le long du fil de filoguidage (Fi),
- repousse du fourrage (Fo) positionné sur la trajectoire du véhicule (1),
- arrêt de l'avance du véhicule (1),
- rotation du véhicule (1) pour que la lame fixe (6) et la lame orientable (61) soient sensiblement parallèles à la trajectoire du fil de filoguidage (Fi),
- rotation du véhicule (1) pour que l'axe longitudinal du véhicule (1) soit sensiblement parallèle à la trajectoire du fil de filoguidage (Fi).

13. Procédé selon la revendication 9, **caractérisé en ce que** la phase d'enclenchement d'un mode du véhicule (1) comprend l'enclenchement du mode nettoyage.

14. Procédé selon la revendication 13, **caractérisé en ce que** la phase de suivi du mode enclenché comprend les étapes suivantes :
- détection du fil de filoguidage (Fi) par l'électronique de commande,
- passage de la lame orientable (61) en position déployée de nettoyage,
- avance du véhicule (1) le long de la trajectoire de filoguidage pour collecter le fourrage (Fo),
- évacuation du fourrage (Fo) dans la zone de rejet (R).

15. Procédé selon l'une des revendications 9 à 14, **caractérisé en ce que** la phase de détermination d'une trajectoire de filoguidage comprend les étapes de :
- dépose d'un fil de filoguidage (Fi) le long de la trajectoire de filoguidage,
- intégration dans l'électronique de commande de la position d'un point de départ (D),
- intégration dans l'électronique de commande de la position d'une zone de rejet (R).

16. Procédé selon l'une des revendications 9 à 15, **caractérisé en ce que** le procédé comprend en outre une étape d'arrêt de sécurité qui comprend les phases de :
- détection d'un obstacle par le sonar ou par l'un des capteurs de contact,
- arrêt du véhicule (1),
- détection de la disparition de l'obstacle par le sonar ou par l'un des capteurs de contact,
- redémarrage du véhicule (1).

## Patentansprüche

1. Autonomes Fahrzeug (1) mit Antriebsmitteln, **dadurch gekennzeichnet, dass** es ein ausrichtbares Abstreiforgan, das ausgelegt ist, um Futter (Fo) zu räumen und eine ausrichtbare Lamelle (61) umfasst, die zwischen einer eingezogenen Position und einer ausgefahrenen Position einstellbar ist, eine Steuerelektronik und Mittel zum Ermitteln von Hindernissen umfasst, wobei es die Antriebsmittel und die Steuerelektronik dem Fahrzeug (1) erlauben, in einen Räummodus zu wechseln, in dem das Fahrzeug (1) einen etwa um einen Rotationspunkt, der sich zwischen den Antriebsmitteln befindet, schwingenden Weg zurücklegt, damit das Abstreiforgan Futter (Fo) sammelt und es seitlich in Form eines Schwads (A) abführt, oder in einen Reinigungsmodus, in dem das Fahrzeug (1) einen Weg bis zu einer Entsorgungszone (R) zurücklegt, wobei das Abstreiforgan erlaubt, das Futter (Fo) auf dem gesamten Weg bis zu der Entsorgungszone (R) zu sammeln und zu räumen, wobei das Abstreiforgan eine feste Lamelle (6) umfasst, die in einem Winkel ausgerichtet ist, der zwischen 50 und 70 Grad in Bezug auf eine Längsachse des Fahrzeugs (1) liegt, wobei die Rotation bewirkt, dass sich die feste Lamelle (6), dann die Längsachse des Fahrzeugs (1) abwechselnd etwa parallel zum Weg befinden.

2. Fahrzeug (1) nach Anspruch 1, **dadurch gekennzeichnet, dass** in einer ausgefahrenen Reinigungsposition die ausrichtbare Lamelle (61) etwa senkrecht zu einer Längsachse des Fahrzeugs (1) ist.

3. Fahrzeug (1) nach einem der vorangehenden Ansprüche, **dadurch gekennzeichnet, dass** die ausrichtbare Lamelle (61) von einem Zylinder (12) zwischen der eingezogenen Position und der ausgefahrenen Position bewegt wird.

4. Fahrzeug (1) nach einem der vorangehenden Ansprüche, **dadurch gekennzeichnet, dass** die Steuerelektronik eine Induktivführungsvorrichtung umfasst, die es dem Fahrzeug (1) erlaubt, einem am Boden positionierten Induktivführungsdraht (Fi) zu folgen.

5. Fahrzeug (1) nach einem der vorangehenden Ansprüche, **dadurch gekennzeichnet, dass** die Mittel zum Ermitteln eines Hindernisses mindestens ein Sonar umfassen, der in der Vortriebsrichtung des Fahrzeugs (1) positioniert ist.

6. Fahrzeug (1) nach einem der vorangehenden Ansprüche, **dadurch gekennzeichnet, dass** die Mittel zum Ermitteln eines Hindernisses mindestens einen Kontaktsensor umfassen.

7. Fahrzeug (1) nach einem der vorangehenden Ansprüche, **dadurch gekennzeichnet, dass** die Steuerelektronik eine Auswahlschnittstelle (10) umfasst, die erlaubt, abwechselnd den Räummodus und den Reinigungsmodus einzuschalten.

8. Fahrzeug (1) nach einem der vorangehenden Ansprüche, **dadurch gekennzeichnet, dass** die Steuerelektronik ein Zeitprogrammierungsorgan umfasst, das erlaubt, automatisch den Räummodus einzuschalten.

9. Verfahren zum Räumen von Futter (Fo) durch ein Fahrzeug (1) nach einem der Ansprüche 1 bis 8, **dadurch gekennzeichnet, dass** das Verfahren die folgenden Phasen umfasst:
- Bestimmen eines Induktivführungswegs,
- Positionieren eines Fahrzeugs (1) nach einem der Ansprüche 1 bis 8 an einem Startpunkt (D),
- Einschalten eines Modus des Fahrzeugs (1),
- Durchführen des eingeschalteten Modus,
- Rückkehr des Fahrzeugs (1) zum Startpunkt (D),
- Anhalten des Fahrzeugs (1).

10. Verfahren nach Anspruch 9, **dadurch gekennzeichnet, dass** die Einschaltphase eines Modus des Fahrzeugs (1) das Einschalten des Räummodus umfasst.

11. Verfahren nach Anspruch 10, **dadurch gekennzeichnet, dass** die Phase der Durchführung des eingeschalteten Modus die folgenden Schritte umfasst:
- Ermitteln des Induktivführungsdrahts (Fi) durch die Steuerelektronik,
- Wechseln der ausrichtbaren Lamelle (61) in eingefahrene Position,
- Vorwärtsbewegen und Schwingen des Fahrzeugs (1) entlang des Induktivführungswegs, um das Futter (Fo) zu sammeln und es in Form eines Schwads (A) abzuführen.

12. Verfahren nach Anspruch 11, **dadurch gekennzeichnet, dass** der Schritt des Vorwärtsbewegens und Schwingens des Fahrzeugs (1) entlang des Induktivführungswegs, um das Futter (Fo) zu sammeln und es in Form eines Schwads (A) abzuführen, die folgenden Schritte umfasst:
- Vorwärtsbewegen des Fahrzeugs (1) entlang des Induktivführungsdrahts (Fi),
- Räumen des auf dem Weg des Fahrzeugs (1) positionierten Futters (Fo),
- Anhalten der Vorwärtsbewegung des Fahrzeugs (1),
- Drehen des Fahrzeugs (1), damit die feste Lamelle (6) und die ausrichtbare Lamelle (61) etwa parallel zum Weg des Induktivführungsdrahts (Fi) sind,
- Drehen des Fahrzeugs (1), damit die Längsachse des Fahrzeugs (1) etwa parallel zum Weg des Induktivführungsdrahts (Fi) ist.

13. Verfahren nach Anspruch 9, **dadurch gekennzeichnet, dass** die Einschaltphase eines Modus des Fahrzeugs (1) das Einschalten des Reinigungsmodus umfasst.

14. Verfahren nach Anspruch 13, **dadurch gekennzeichnet, dass** die Phase des Durchführens des eingeschalteten Modus die folgenden Schritte umfasst:
- Ermitteln des Induktivführungsdrahts (Fi) durch die Steuerelektronik,
- Wechseln der ausrichtbaren Lamelle (61) in ausgefahrene Reinigungsposition,
- Vorwärtsbewegen des Fahrzeugs (1) entlang des Induktivführungswegs, um das Futter (Fo) zu sammeln,
- Abführen des Futters (Fo) in die Entsorgungszone (R).

15. Verfahren nach einem der Ansprüche 9 bis 14, **dadurch gekennzeichnet, dass** die Phase des Bestimmens eines Induktivführungswegs die Schritte umfasst:
- Ablegen eines Induktivführungsdrahts (Fi) entlang des Induktivführungswegs,
- Integrieren der Position eines Startpunkts (D) in die Steuerelektronik,
- Integrieren der Position einer Entsorgungszone (R) in die Steuerelektronik.

16. Verfahren nach einem der Ansprüche 9 bis 15, **dadurch gekennzeichnet, dass** das Verfahren ferner einen Sicherheitsanhalteschritt umfasst, der die Phasen umfasst:
- Ermitteln eines Hindernisses durch das Sonar oder durch einen der Kontaktsensoren,
- Anhalten des Fahrzeugs (1),
- Ermitteln des Verschwindens des Hindernisses durch das Sonar oder durch einen der Kontaktsensoren,
- Neustart des Fahrzeugs (1).

## Claims

1. An autonomous vehicle (1) with propulsion means **characterized in that** it comprises an orientable scraping member configured to push back the fodder (Fo) and comprising an orientable blade (61) operable between a retracted position and a deployed position, a control electronics and obstacle detection means, the propulsion means and control electronics allowing the vehicle (1) to go into a pushback mode in which the vehicle (1) follows a path that oscillates substantially around a point of rotation located between the propulsion means so that the scraping member collects the fodder (Fo) and discharges it laterally in the form of a swath (A), or in a cleaning mode in which the vehicle (1) follows a path up to a reject zone (R), the scraping member making it possible to collect and push back the fodder (Fo) over the entire path up to the reject zone (R), the scraping member comprising a fixed blade (6) oriented at an angle comprised between 50 and 70 degrees relative to a longitudinal axis of the vehicle (1), the rotation having the effect that the fixed blade (6), then the longitudinal axis of the vehicle (1) are found alternately substantially parallel to the path.

2. The vehicle (1) according to claim 1, **characterized in that** in a deployed cleaning position, the orientable blade (61) is substantially perpendicular to a longitudinal axis of the vehicle (1).

3. The vehicle (1) according to any of the preceding claims, **characterized in that** the orientable blade (61) is operated by a jack (12) between the retracted position and the deployed position.

4. The vehicle (1) according to any of the preceding claims, **characterized in that** the control electronics comprises a wire guidance device allowing the vehicle (1) to follow a wire guidance wire (Fi) positioned on the ground.

5. The vehicle (1) according to any of the preceding claims, **characterized in that** the obstacle detection means comprise at least one sonar positioned in the direction of travel of the vehicle (1).

6. The vehicle (1) according to any of the preceding claims, **characterized in that** the obstacle detection means comprise at least one contact sensor.

7. The vehicle (1) according to any of the preceding claims, **characterized in that** the control electronics comprises a selection interface (10) making it possible to alternately engage the push back mode and the cleaning mode.

8. The vehicle (1) according to any of the preceding claims, **characterized in that** the control electronics comprises a time programming member making it possible to automatically engage the push back mode.

9. A method for scraping fodder (Fo) by a vehicle (1) according to any of claims 1 to 8, **characterized in that** the method comprises the following phases:
- determining a wire guidance path,
- positioning a vehicle (1) according to any of claims 1 to 8 on a starting point (D),
- engaging a vehicle mode (1),
- monitoring the engaged mode,
- returning the vehicle (1) to the starting point (D),
- stopping the vehicle (1).

10. The method according to claim 9, **characterized in that** the phase of engaging a vehicle mode (1) comprises the engagement of the push back mode.

11. The method according to claim 10, **characterized in that** the phase of monitoring the engaged mode comprises the following steps:
- detecting the wire guidance wire (Fi) by the control electronics,
- passing the orientable blade (61) in the retracted position,
- advancing and oscillating the vehicle (1) along the wire guidance path to collect the fodder (Fo) and discharge it in the form of a swath (A).

12. The method according to claim 1, **characterized in that** the step of advancing and oscillating the vehicle (1) along the wire guidance path to collect the fodder (Fo) and discharge it in the form of a swath (A), comprises the steps of:
- advancing the vehicle (1) along the wire guidance wire (Fi),
- pushing back the fodder (Fo) positioned on the path of the vehicle (1),
- stopping the advance of the vehicle (1),
- rotating the vehicle (1) so that the fixed blade (6) and the orientable blade (61) are substantially parallel to the path of the wire guidance wire (Fi),
- rotating the vehicle (1) so that the longitudinal axis of the vehicle (1) is substantially parallel to the path of the wire guidance wire (Fi).

13. The method according to claim 9, **characterized in that** the phase of activating a vehicle mode (1) comprises the activation of the cleaning mode.

14. The method according to claim 13, **characterized in that** the phase of monitoring the engaged mode comprises the following steps:
- detecting the wire guidance wire (Fi) by the control electronics,
- passing the orientable blade (61) in the deployed cleaning position,
- advancing the vehicle (1) along the wire guidance path to collect the fodder (Fo),
- evacuating the fodder (Fo) in the rejection zone (R).

15. The method according to any of claims 9 to 14, **characterized in that** the phase of determining a wire guidance path comprises the steps of:
- removing a wire guidance wire (Fi) along the wire guidance path,
- integrating into the control electronics of the position of a starting point (D),
- integrating into the electronic control of the position of a rejection zone (R).

16. The method according to any of claims 9 to 15, **characterized in that** the method further comprises a safety shutdown step which comprises the phases of:
- detecting an obstacle by sonar or by one of the contact sensors,
- stopping the vehicle (1),
- detecting the disappearance of the obstacle by sonar or by one of the contact sensors,
- restarting the vehicle (1).
